# FASCICULE DE BREVET EUROPEEN

(11) **EP 3 189 405 B1**
(45) Date de publication et mention de la délivrance du brevet: **08.08.2018**
(21) Numéro de dépôt: 14741345.4
(22) Date de dépôt: 25.06.2014
(51) Int. Cl.: G06F 3/041, G06T 7/10

(54) **PROCÉDÉ DE DÉTERMINATION D'UN CONTOUR D'AU MOINS UNE ZONE SUR UNE SURFACE MATRICIELLE**
VERFAHREN ZUR BESTIMMUNG EINER KONTUR MINDESTENS EINES BEREICHS AUF EINER MATRIZENOBERFLÄCHE
METHOD FOR DETERMINING A CONTOUR OF AT LEAST ONE AREA ON A MATRIX SURFACE

(30) Priorité: 18.07.2013 FR 1357074
(43) Date de publication de la demande: 12.07.2017
(73) Titulaire: Nissha Printing Co., Ltd., Kyoto-shi, Kyoto 604-8551 (JP)
(72) Inventeur: OLIVIER, Julien, 33800 Bordeaux (FR)
(74) Mandataire: Müller-Boré & Partner Patentanwälte PartG mbB
(86) Numéro de dépôt international: PCT/FR2014/051604
(87) Numéro de publication internationale: WO 2015/007972

(56) Documents cités:
- EP-A2- 0 460 968
- Uriel H. Hernandez-Belmonte, Victor Ayala-Ramirez, Raul E. Sanchez-Yanez: "Enhancing CCL Algorithms by Using a ReducedConnectivity Mask" In: "5th Mexican Conference, MCPR 2013, Queretaro, Mexico, June 26-29, 2013. Proceedings", 29 juin 2013 (2013-06-29), Springer, XP002721932, ISBN: 978-3-642-38988-7 vol. 7914, pages 195-203, DOI: 10.1007/978-3-642-38989-4, page 197, dernier alinéa - page 200, alinéa 3; figures 2-4; tableau 1

## Description

La présente invention concerne un procédé de détermination du contour d'au moins une zone de propriété donnée, sur une surface matricielle, c'est à dire organisée sous forme de matrice.

L'application préférentielle de l'invention est l'acquisition de données par un capteur tactile matriciel, et la détection du contour de zones de contact sur un tel capteur. Le procédé peut notamment être appliqué à un capteur tactile matriciel multicontacts mais peut également être appliqué à la détermination du contour de la zone de contact d'un capteur tactile monocontact. Appliquée à un capteur tactile, la présente invention concerne donc l'acquisition de données représentatives d'un ou plusieurs contacts ou points d'appuis exercés sur la surface d'un capteur tactile.

Bien que décrite en détail et illustrée dans le cadre d'une application à un capteur tactile, l'invention est applicable à toute surface organisée sous forme de matrice, tel un réseau de pixels, ou une image sur laquelle est superposé un quadrillage. Elle peut être appliquée de manière générale à un logiciel ou un procédé de traitement d'image pour des fonctions de détection de formes, d'une couleur, ou de toute autre propriété ayant une représentation graphique particulière, ou une représentation propre, par une caractéristique donnée des cellules d'une matrice.

Un capteur tactile matriciel, qui sert à illustrer l'invention, comprend un ensemble de cellules disposées en ligne et en colonne. Dans son fonctionnement le plus global, ces cellules sont balayées de façon à mesurer la présence de points de contact ou de points d'appui.

On désigne de manière générale dans le présent document par « balayage séquentiel d'une surface matricielle» ou « balayage séquentiel d'une matrice » le fait de lire, mesurer, ou déterminer une caractéristique de chaque cellule d'une matrice, l'une après l'autre.

On désigne par « balayage d'une cellule » la lecture, la mesure ou la détermination d'une caractéristique de la cellule considérée. On désigne par « cellule courante balayée », la cellule de la matrice dont est lue, mesurée, ou déterminée une caractéristique à un instant présent du balayage séquentiel de la matrice.

On connaît notamment les capteurs tactiles utilisant une matrice de cellules actives comme par exemple de type TFT (Thin Film Transistor), de type photodiode qui peuvent s'intégrer directement dans la matrice d'un écran LCD (Liquid Cristal Display), ou encore de type piézo-électrique.

Dans le document EP 1 719 047, le capteur tactile matriciel est constitué d'un réseau de pistes conductrices disposées selon des lignes et des colonnes, formant une matrice, des cellules de la matrice étant ainsi définies au niveau de chaque intersection des lignes et des colonnes du réseau matriciel.

L'acquisition des données est réalisée en balayant séquentiellement chaque cellule de la matrice, c'est-à-dire en alimentant successivement chaque ligne du réseau matriciel et en mesurant, pour chaque ligne alimentée, et au niveau successivement de chaque colonne, une caractéristique électrique représentative d'un niveau d'impédance.

Grâce à ce balayage séquentiel des cellules, il est possible de détecter simultanément lors de chaque phase de balayage, plusieurs zones de contact sur le capteur tactile.

Les données mesurées, et notamment le niveau d'impédance de chaque cellule, sont enregistrées.

Du fait de l'enregistrement de l'ensemble des données acquises à chaque phase de balayage, il est nécessaire de disposer d'une mémoire électronique de grande taille, augmentant ainsi le coût de fabrication du capteur tactile.

Par ailleurs, dans le cadre d'un capteur tactile qui présente une grande sensibilité et peut comporter plusieurs milliers de cellules selon la taille de sa surface tactile, l'ensemble des données acquises pour chaque cellule est ensuite analysé afin de déterminer des zones de contact regroupant les cellules voisines dans le réseau matriciel correspondant à un contact unique ou un point d'appui sur la surface tactile du capteur.

La détection des contours de ces zones de contact nécessite donc habituellement le balayage et l'enregistrement de l'intégralité de la surface matricielle à analyser, correspondant à une « image » issue du balayage d'un capteur tactile.

Dans d'autres applications, comme le traitement numérique des images, la détection du contour de zones présentant une propriété donnée nécessite de manière analogue le balayage et l'enregistrement de l'intégralité de la surface à analyser, ladite surface pouvant être par exemple une image numérique, une photo numérique, ou un dessin numérique. L'image, pouvant par exemple être considérée comme une matrice de pixels, est traitée pour détecter les zones présentant la propriété donnée recherchée. Les contours de ces zones peuvent ensuite être déterminés.

On connaît au travers du document WO99/38149 (Westermann) un procédé de détection du contour d'une forme utilisant la détection de « points hauts ». La zone activée autour de chaque « point haut », correspondant à un contact, est ensuite déterminée. Enfin, le contour de cette zone est déterminé.

Cela nécessite une mémoire électronique importante, un temps de traitement logiciel long, et/ou des capacités de calcul importantes. En outre, dans ce type de procédé, la détection se faisant itérativement « en étoile» en partant d'un maximum et en rayonnant autour de ce dernier, le temps d'analyse augmente rapidement avec l'augmentation de la surface de la zone concernée.

Hernandez-Belmonte et al.: "Enhancing CCL Algorithms by Using a ReducedConnectivity Mask" (dans "5th Mexican Conférence, MCPR 2013, Queretaro, Mexico, June 26-29, 2013. Proceedings", 29 Juin 2013, Springer, XP002721932, ISBN: 978-3-642-38988-7, vol. 7914, pages 195-203, DOI: 10.1007/978-3-642-38989-4) divulge un dispositif d'analyse d'une matrice d'éléments afin de déterminer les groupes d'éléments connectés entre eux consistant a balayer la matrice et à affecter un indice à chaque élément scruté indiquant sa connectivité aves ses voisins sur la base d'une fenêtre de trois éléments voisins de l'élément scruté. Notament, pour chaque élément scruté, le traçage d'une partie du contour de l'ensemble des éléments interconnectés est mémorisé.

La présente invention a pour but de proposer un procédé de détermination du contour de zones de propriété donnée, permettant de résoudre au moins l'un des inconvénients précités.

A cette fin, l'invention porte sur un procédé de détermination d'un contour d'au moins une zone présentant une propriété donnée sur une surface matricielle comportant un ensemble de cellules, comprenant le balayage séquentiel des cellules de ladite surface matricielle afin de déterminer un état de chaque cellule vis-à-vis de la propriété donnée, une cellule étant dite dans un état activé lorsqu'elle présente la propriété donnée et dans un état désactivé
lorsqu'elle ne présente pas la propriété donnée, le procédé comprenant, pour chaque cellule balayée, les étapes suivantes :
- détection de l'état activé ou désactivé de la cellule courante balayée,
- détermination de l'état activé ou désactivé de trois cellules précédemment balayées, voisines de la cellule courante balayée ;
- choix, en fonction de l'état de la cellule courante balayée et des trois cellules voisines, d'une instruction de traçage;
- application de l'instruction de traçage ; et
- mémorisation de données issues de l'instruction de traçage, lesdites données définissant le contour au fur et à mesure du balayage séquentiel des cellules de la surface matricielle.

Le contour de chaque zone formée par les cellules activées, présentant la propriété donnée considérée, est ainsi défini au fur et à mesure du balayage, de sorte qu'il est totalement défini à la fin d'une seule séquence de balayage de la surface. Le procédé mis en oeuvre est de type linéaire, et non exponentiel, de sorte que le nombre d'opérations nécessaires à la détection de contour est constant et limité. Le traçage de ce contour ou de ces contours ne faisant pas appel à une méthode itérative au sens des méthodes connues dans l'état de la technique, il ne nécessite pas une puissance de calcul importante. La quantité de calculs nécessaires au traçage du contour demeure en outre sensiblement la même, quelle que soit la taille des zones formées par les cellules en état activé. Un tel procédé ne nécessite pas la mise en mémoire de l'état de toutes les cellules de la matrice. Une mémoire électronique de taille réduite est suffisante à sa mise en oeuvre. La mémoire nécessaire est ainsi limitée au stockage des données définissant le ou les contours, et à l'état des cellules d'une ligne et de deux cellules en plus. Cela permet d'intégrer le procédé développé directement dans une machine logique d'état ou bien un processeur ou un microcontrôleur.

De manière générale, une cellule voisine est une cellule directement adjacente à la cellule courante balayée. Les cellules voisines sont les cellules qui entourent directement la cellule considérée, sans autre cellule interposée entre la cellule considérée et lesdites cellules voisines

L'instruction de traçage est avantageusement choisie dans une bibliothèque préétablie de seize instructions correspondant aux seize combinaisons d'états que peuvent présenter ladite cellule courante balayée et lesdites trois cellules voisines.

Les instructions de traçage peuvent être vectorisées. Des instructions vectorisées comportent des vecteurs définis dans le plan de la matrice.

Un contour peut être défini par un point de départ et une liste de vecteurs. Il peut en outre être défini par un identifiant propre. Un identifiant propre est, de manière générale, une dénomination ou un marqueur permettant de distinguer les contours définis les uns des autres.

Avantageusement, chaque instruction de traçage est constituée d'opérations élémentaires choisies parmi :
a) la création d'un nouveau contour ;
b) l'ajout d'un vecteur à la fin de la liste de vecteurs d'un contour ;
c) l'ajout d'un vecteur au début de la liste de vecteurs d'un contour ;
d) la jonction de deux contours.

De manière avantageuse, chaque cellule étant définie dans un repère de la surface matricielle par une coordonnée en abscisse et une coordonnée en ordonnée, le balayage étant réalisé en balayant toute une ligne d'ordonnée, selon le sens croissant en abscisse, puis la ligne suivante, d'ordonnée supérieure, les trois cellules voisines à la cellule courante balayée de coordonnées (Cn,Lm) sont les cellules de coordonnées respectives :
- (Cn-1,Lm)
- (Cn-1,Lm-1)
- (Cn,Lm-1).

Selon une variante de l'invention, l'état activé d'une cellule est associé à la présence d'une caractéristique de la cellule dans une plage de valeur prédéfinie.

L'invention peut notamment être appliquée à un capteur tactile comprenant un réseau matriciel de cellules, la propriété donnée étant alors le niveau de pression de contact. Avantageusement, lesdites cellules peuvent être définies à chaque intersection d'une ligne et d'une colonne d'un réseau de pistes conductrices constituées de lignes et de colonnes, et le balayage séquentiel des cellules consiste à alimenter successivement chaque ligne du réseau et à mesurer, pour chaque ligne alimentée, et au niveau successivement de chaque colonne, une caractéristique électrique représentative d'un niveau d'impédance.

L'invention porte aussi sur un procédé de détermination d'un contour d'au moins une zone présentant une propriété donnée sur une surface matricielle comportant un ensemble de cellules, dans lequel :
- on divise la surface matricielle en sous-ensembles de cellules, et
- on applique un procédé de détermination d'un contour tel que précédemment décrit, sur au moins un desdits sous-ensembles de cellules.

Dans ce cas, si des contours adjacents ont été déterminés pour des sous-ensembles, lesdits contours adjacents peuvent être joints en un seul contour. Des contours adjacents sont des contours tangents en un ou plusieurs points. Dans le cas où les contours comportent une liste de vecteurs, des contours adjacents peuvent être des contours présentant au moins un vecteur en commun, d'orientation identique ou opposée.

L'invention porte enfin sur un système d'acquisition de données d'un capteur tactile matriciel, comprenant un réseau matriciel de cellules, comprenant :
- des moyens de balayage séquentiel des cellules du réseau matriciel ;
- des moyens de mesure d'une caractéristique électrique au niveau de chaque cellule ;
- des moyens de détermination d'un état activé ou désactivé de chaque cellule en fonction de la caractéristique électrique mesurée,
- une bibliothèque d'instructions,
- une mémoire électronique, et
- un calculateur configuré pour la mise en oeuvre d'un procédé de détermination de contour tel que précédemment décrit.

Le système d'acquisition de données peut comporter un écran de visualisation juxtaposé au capteur tactile matriciel de sorte à former un écran tactile.

D'autres particularités et avantages de l'invention apparaîtront encore dans la description ci-après.

Aux dessins annexés, donnés à titre d'exemples non limitatifs :
- la figure 1 présente schématiquement un exemple de surface matricielle présentant des cellules activées dont le contour est à définir ;
- La figure 2 présente schématiquement sous forme de logigramme un procédé conforme à un mode de réalisation de l'invention ;
- La figure 3 présente schématiquement l'instruction de traçage réalisée lors du balayage de la première cellule activée, dans l'exemple de surface de la figure 1 ;
- La figure 4 présente schématiquement l'instruction de traçage réalisée lors du balayage de la cellule balayée immédiatement après la première cellule activée, dans l'exemple de surface de la figure 1 ;
- La figure 5 présente schématiquement l'instruction de traçage réalisée lors du balayage d'une cellule donnée, dans l'exemple de surface de la figure 1 ;
- La figure 6 présente schématiquement des vecteurs tracés suite à l'application du procédé illustré aux figures 1 à 3, à la surface présentée en figure 1 ;
- La figure 7 présente un exemple de tracé de contour pouvant être obtenu suite à l'application d'un procédé conforme à une variante de l'invention ;
- La figure 8 est un tableau d'instructions tel que pouvant être mis en jeu dans une variante de l'invention, avec une représentation graphique schématique des instructions ; et
- La figure 9 présente un système d'acquisition de données conforme à un mode de réalisation de l'invention.

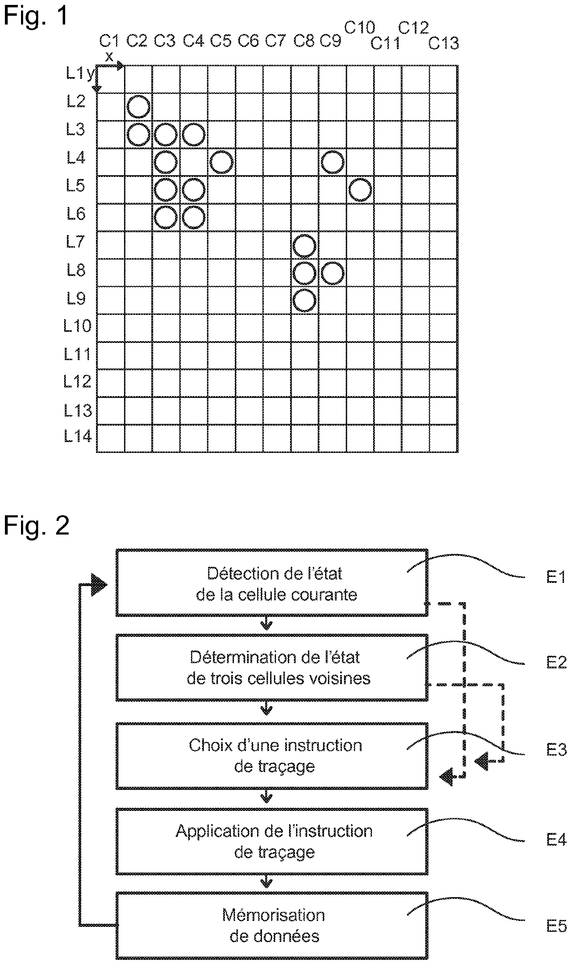

Une surface matricielle est schématiquement représentée à la figure 1. Il s'agit, typiquement, de la surface d'un capteur tactile présentant des pistes conductrices arrangées en lignes et en colonnes, l'intersection de chaque piste formant un noeud, correspondant à une cellule de la matrice. Il peut également s'agir, tel que précédemment évoqué, d'une représentation graphique en deux dimensions, divisée en lignes et en colonnes dont l'intersection forme des cases qui correspondent à des cellules d'une matrice ainsi formée.

Pour illustrer l'invention, on considérera par la suite, sauf mention contraire, que chaque cellule correspond à la représentation graphique d'un noeud d'un capteur tactile.

Les cellules de la surface matricielle font l'objet d'un balayage séquentiel, afin de déterminer l'état de chacune des cellules. Dans l'exemple ici représenté, les cellules d'une ligne sont toutes balayées de gauche à droite, avant que les cellules de la ligne suivante, située sous la ligne précédente, ne soient balayées à leur tour. Ce sens de balayage est donné à titre d'exemple. Les notions de ligne et de colonne peuvent bien évidemment être interverties, de même que le balayage peut être réalisé de droite à gauche, et/ou du bas vers le haut. Les règles de traçage du contour qui seront exposés ci-après doivent alors être adaptées au sens de balayage du capteur.

Chaque cellule de la surface matricielle peut présenter soit un état dit « activé », soit un état dit « désactivé ». Une cellule présentant un état activé est une cellule présentant une propriété donnée. La propriété donnée peut être le fait qu'une caractéristique de la cellule, ou une caractéristique mesurée pour la cellule, soit dans une plage de valeur prédéfinie. Pour un capteur tactile, une cellule activée est typiquement une cellule pour laquelle un contact est détecté. De manière plus générale, un état activé correspond au fait qu'une caractéristique donnée de la cellule considérée soit dans un intervalle prédéfini.

Les cellules activées dans l'exemple représenté sur les figures 1, 3, 4 et 5 sont représentées par une case comportant un cercle. L'objet de l'invention est de déterminer le contour de ces cellules activées. En d'autres termes, l'invention vise à déterminer le contour des zones dans lesquelles des cellules adjacentes sont activées.

A cette fin, un procédé conforme à l'invention comporte les étapes suivantes, présentées sous forme de logigramme à la figure 2 :
- détection E1 de l'état de la cellule courant balayée. A cette étape, l'état de la cellule courante balayée est enregistré dans une mémoire tampon.
- détermination E2 de l'état activé ou désactivé de trois cellules, voisines de la cellule courante balayée, précédemment balayées. Cette détermination est avantageusement réalisée par lecture de l'état de ces cellules dans une mémoire « tampon » dans laquelle leur état a été enregistré suite à leur balayage.
- choix E3, en fonction de l'état de la cellule courante balayée et des trois cellules voisines (le flux d'information étant représenté par des flèches en pointillés), d'une instruction de traçage.
- application E4 de l'instruction de traçage.
- mémorisation E5 de données issues de l'instruction de traçage.

Le procédé reprend ensuite à l'étape de détection E1 pour la cellule suivante, selon l'ordre de balayage de la surface. Cette cellule suivante devient la cellule courante balayée.

La surface matricielle présentée à titre d'exemple à la figure 1 comporte quatorze lignes et treize colonnes. Les lignes sont référencées L1 à L14, les colonnes sont référencées C1 à C13.

Par convention, on peut désigner chaque cellule par une coordonnée en abscisse Cn (n étant compris entre 1 et 13 dans l'exemple représenté), et une coordonnée en ordonnée Lm (m étant compris entre 1 et 14 dans l'exemple représenté).

La cellule de coordonnées (Cn,Lm) est désignée par la suite « cellule CnLm ».

Dans l'exemple ici représenté, le balayage est réalisé en balayant toute une ligne, selon le sens croissant en abscisse, puis la ligne suivante, d'ordonnée supérieure.

Le balayage commence donc par la cellule de coordonnées C1L1, puis C2L1, et ainsi de suite jusque C13L1, puis se poursuit à la première cellule de la ligne suivante C1L2, et ainsi de suite.

Pour chaque cellule balayée, l'état de la cellule est déterminé et mis en mémoire. La mémoire employée pour le stockage de l'état des cellules doit avantageusement permettre le stockage de l'état d'un nombre de cellules égal au nombre de colonnes de la matrice plus deux. Un stockage plus important peut également être employé. Dans l'exemple représenté, la mémoire est adaptée au stockage de l'état de quinze cellules.

Lorsque la mémoire est pleine, l'état correspondant à la cellule la plus anciennement balayée est effacé pour permettre l'enregistrement de l'état de la dernière cellule balayée.

Par exemple, lors du balayage de la cellule C3L2, l'état de la cellule C1L1 est effacé, afin de permettre l'enregistrement de l'état de la cellule C3L2 dans une mémoire prévue pour le stockage de quinze états de cellule au maximum.

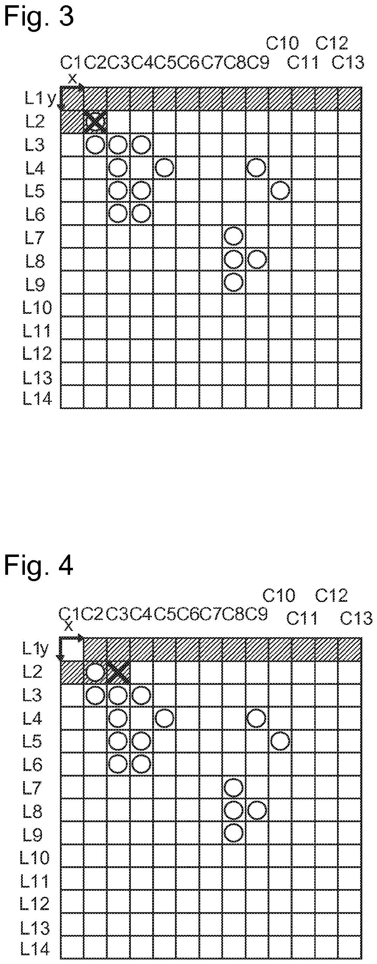

Le groupe de cellule dont l'état est mis en mémoire est représenté hachuré sur les figures 3, 4 et 5. La cellule courante balayée, dont l'état est détecté est marquée d'une croix.

Les états respectifs de trois cellules voisines à la cellule balayée de coordonnées (Cn,Lm) sont pris en compte dans la mise en oeuvre de l'invention, afin de déterminer une consigne de traçage. De manière générale, une cellule voisine est une cellule directement adjacente à la cellule courante balayée. Les cellules voisines sont les cellules qui entourent directement la cellule considérée, sans autre cellule interposée entre la cellule considérée et lesdites cellules voisines. Considérant une matrice dans laquelle la cellule courante balayée a pour coordonnées (Cn, Lm), les cellules voisines de la cellule courante balayée ont pour coordonnées: (Cn-1,Lm-1); (Cn,Lm-1) ; (Cn+1,Lm-1); (Cn-1,Lm); (Cn+1,Lm); (Cn-1,Lm+1); (Cn,Lm+1) ; (Cn+1,Lm+1).

Dans l'exemple ici présenté, du fait du sens de balayage employé, les quatre cellules entrant dans la détermination de la consigne ont pour coordonnées :
- (Cn,Lm)
- (Cn-1,Lm)
- (Cn-1,Lm-1)
- (Cn,Lm-1)

A titre d'exemple, lors du balayage de la cellule C2L2 représenté à la figure 3, on prend en compte l'état précédemment mis en mémoire des cellules C1L2, C1L1 , et C2L1.

Prenant en considération quatre cellules pouvant chacune présenter deux états, à savoir activé ou désactivé, les quatre cellules ont seize combinaison d'états possibles (2⁴ combinaisons).

A chaque combinaison est associée une instruction de traçage. Les instructions de traçage sont vectorisées, c'est-à-dire qu'elles comportent une suite de vecteurs défini dans le plan de la surface matricielle. Dans le cadre d'une matrice à cellules organisées en lignes et en colonnes, par exemple telle que représentée et précédemment décrite, une instruction de traçage peut comporter une succession de vecteurs unitaires, correspondant respectivement à un traçage vers la droite, vers la gauche, vers le haut ou vers le bas, ces notions s'entendant ainsi dans l'exemple représenté :
- vecteur (1,0) : instruction « DROITE » correspondant à un traçage vers la droite ;
- vecteur (-1,0) : instruction « GAUCHE » correspondant à un traçage vers la gauche ;
- vecteur (0,1) : instruction « BAS » correspondant à un traçage vers le bas ;
- vecteur **(0,-1)** : instruction « HAUT » correspondant à un traçage vers le haut.

Chaque instruction de traçage est la combinaison, dans un ordre donné, de quatre opérations élémentaires :
- la création d'un nouveau contour ;
- l'ajout d'un vecteur à la fin de la liste de vecteurs d'un contour ;
- l'ajout d'un vecteur au début de la liste de vecteurs d'un contour ;
- la jonction de deux contours.

Les instructions de traçage sont avantageusement stockées dans une mémoire électronique constituant une bibliothèque d'instructions.

Ainsi, avec le sens de balayage considéré dans l'exemple illustré, les instructions employées sont décrites dans le tableau suivant. « 0 » correspond à un état inactivé de la cellule. « 1 » correspond à un état activé de la cellule. Par convention, le réseau qui quadrille les cellules est défini par des coordonnées en abscisse et en ordonnées, telles que la cellule CnLm est quadrillé par les points de coordonnées : (x,y) ; (x+1 ,y) ; (x+1,y+1) et (x,y+1).

Les seize cas de figures possibles, correspondant aux seize combinaisons d'états possibles des cellules considérées, sont présentés ci-après, du « cas 0 » au « cas 15 ».

| | Cellule Cn-1Lm | Cellule Cn-1Lm-1 | Cellule CnLm-1 | Cellule CnLm | Instruction |
|---|---|---|---|---|---|
| Cas 0 | 0 | 0 | 0 | 0 | Aucune modification n'est effectuée |
| Cas 1 | 1 | 0 | 0 | 0 | Ajout d'un vecteur « BAS » à la fin de la liste de vecteurs du contour associé à la cellule Cn-1Lm. |
| Cas 2 | 0 | 1 | 0 | 0 | Jonction du contour associé aux cellules CnLm-1 ou Cn-1Lm-1 et du contour associé aux cellules Cn-1Lm ou Cn-1Lm-1. |
| Cas 3 | 1 | 1 | 0 | 0 | Ajout d'un vecteur « BAS» à la fin du contour associé à cellule CnLm-1 ou sinon à cellule Cn-1Lm-1. |
| Cas 4 | 0 | 0 | 1 | 0 | Modification du point de départ aux coordonnées (x+1,y) et insertion d'un vecteur «GAUCHE» au début du contour associé à la cellule CnLm-1. |
| Cas 5 | 1 | 0 | 1 | 0 | Ajout d'un vecteur « BAS » au contour associé à la cellule Cn-1,Lm et insertion d'un vecteur « GAUCHE » au contour associé à la cellule CnLm-1 et modification de son point de départ aux coordonnées (x+1,y). |
| Cas 6 | 0 | 1 | 1 | 0 | Insertion d'un vecteur « GAUCHE » au contour associé à la cellule Cn-1,Lm ou Cn-1Lm-1 et modification de son point de départ aux coordonnées (x+1,y). |
| Cas 7 | 1 | 1 | 1 | 0 | Création d'un nouveau contour ayant pour point de départ (x+1, y) et ajout de 2 vecteurs : « GAUCHE » puis « BAS ». |
| Cas 8 | 0 | 0 | 0 | 1 | Création d'un nouveau contour ayant pour point de départ (x, y+1) et ajout de 2 vecteurs « HAUT » puis « DROITE »). |
| Cas 9 | 1 | 0 | 0 | 1 | Ajout d'un vecteur « DROITE » à la fin de la liste de vecteurs du contour associé à la cellule Cn-1Lm. |
| Cas 10 | 0 | 1 | 0 | 1 | Jonction du contour associé aux cellules CnLm-1 ou Cn-1Lm-1 et du contour associé aux cellules Cn-1Lm ou Cn-1Lm-1; |
| | | | | | Création d'un nouveau contour ayant pour point de départ (x, y+1), suivi d'un vecteur « HAUT » puis « DROITE ») |
| Cas 11 | 1 | 1 | 0 | 1 | Ajout d'un vecteur « DROITE » à la fin du contour associé à la cellule CnLm-1 ou Cn-1Lm-1. |
| Cas 12 | 0 | 0 | 1 | 1 | Insertion d'un vecteur « HAUT» au contour associé à la cellule CnLm-1 et modification de son point de départ aux coordonnées (x, y+1) |
| Cas 13 | 1 | 0 | 1 | 1 | Jonction des deux contours associés aux cellules Cn-1Lm et CnLm-1. |
| Cas 14 | 0 | 1 | 1 | 1 | Insertion d'un vecteur « HAUT » au contour associé à la cellule Cn-1Lm ou Cn-1Lm-1 et modification de son point de départ aux coordonnées (x, y+1). |
| Cas 15 | 1 | 1 | 1 | 1 | Aucune modification n'est effectuée |

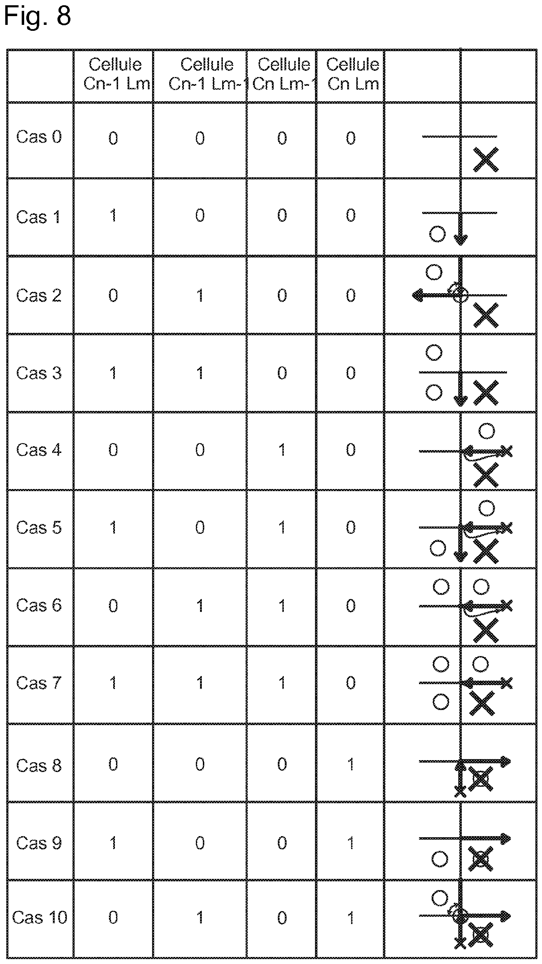

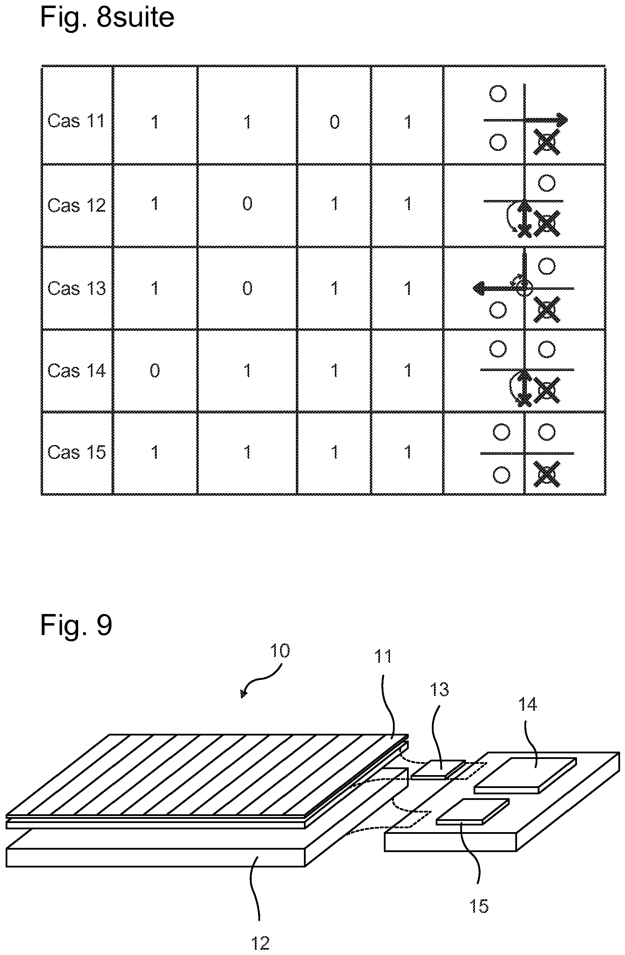

Le tableau d'instructions ci-dessus est repris à la figure 8. La figure 8 y ajoute une représentation graphique conventionnelle de chacune des seize instructions. Cette représentation conventionnelle est employée aux figures 3, 4 et 5 pour représenter des instructions de traçage correspondantes.

Lors du balayage de la première ligne L1, aucune cellule d'ordonnée inférieure n'a été balayée. Afin de disposer des quatre cellules pour l'application du procédé, on considère de manière fictive une ligne L0, dont toutes les cellules présentent un état désactivé.

De même, lors du balayage de la première cellule de chaque ligne, aucune cellule d'abscisse inférieure n'a été balayée. Afin de disposer des quatre cellules pour l'application du procédé, on considère de manière fictive une colonne C0 dont toutes les cellules présentent un état désactivé.

De manière générale, on peut donc considérer que lorsque qu'une cellule est manquante pour mettre en oeuvre l'invention, on lui substitue une cellule d'état désactivé.

Ainsi, lors du balayage de la cellule C1L1, on considère fictivement l'existence des trois cellules voisines C0L1, C0L0, et C1L0, ces trois cellules présentant un état désactivé. Si C1L1 présente un état désactivé, on applique l'instruction du cas 0 présenté dans le tableau ci-dessus. Si C1L1 présente un état activé, on applique l'instruction du cas 8 présenté dans le tableau ci-avant.

Nous allons maintenant décrire en détail la séquence de balayage séquentiel de la surface présentée à titre d'exemple sur les figures.

Le balayage débute par la détermination de l'état de la cellule C1L1, qui est la cellule courante balayée, et est en l'occurrence en état désactivé. Considérant les cellules fictives C0L1, C0L0, et C1L0, toutes trois en état désactivé, l'instruction correspondant au cas 0 est appliquée : pas de modification, c'est-à-dire l'application d'aucune des opérations élémentaires entrant dans la constitution d'une instruction.

Poursuivant le balayage séquentiel, la cellule C2L1 devient la cellule courante balayée. Elle présente également un état désactivé. La cellule C1L1 et les cellules fictives C1L0 et C2L0, sont prises en compte. Etant toutes trois inactives, l'instruction correspondant au cas 0 est appliquée : pas de modification.

Le balayage se poursuit ainsi jusqu'au bout de la ligne 1, à la case C13L1. L'instruction correspondant au cas 0 y est encore appliquée, les quatre cellules considérées étant en état désactivé.

Le balayage se poursuit à la cellule C1L2. On prend en compte les cellules fictives C0L2, C0L1, et C1L1. Toutes ces cellules présentent un état désactivé. L'instruction correspondant au cas 0 est appliquée : pas de modification.

La cellule C2L2 est ensuite la cellule courante balayée (figure 3). Les autres cellules prises en compte sont C1L2, C1L1 et C2L1. C2L2 est en état activé. Les trois autres cellules sont en état désactivé. On applique donc le cas 8, et l'instruction qui s'y rapporte : création d'un nouveau contour ayant pour point de départ (x,y+1) soit (2,3) et ajout de 2 vecteurs « HAUT » puis « DROITE », donc d'un vecteur (0,-1) puis d'un vecteur (1,0) .

La cellule C3L2 est ensuite balayée (figure 4). La mémoire employée pour mémoriser l'état des cellules étant limitée dans l'exemple représenté à 15 cellules (nombre de cellules par ligne plus deux), la mémoire de l'état de C1L1 est effacée pour permettre la mémorisation de l'état de C3L2. Outre C3L2, les cellules prises en compte sont C2L2 (état activé), C2L1 (état désactivé), et C3L1 (état désactivé). L'instruction correspondant au cas 1 est donc appliquée : ajout d'un vecteur « BAS » (0,1) à la fin de la liste de vecteurs du contour associé à la cellule C2L2.

Le balayage séquentiel est ainsi poursuivi, cellule après cellule. Les informations constituant chaque contour sont enregistrées au fur et à mesure. Ces informations sont : un point de départ, et une liste de vecteurs. Chaque contour est également associé à un identifiant propre.

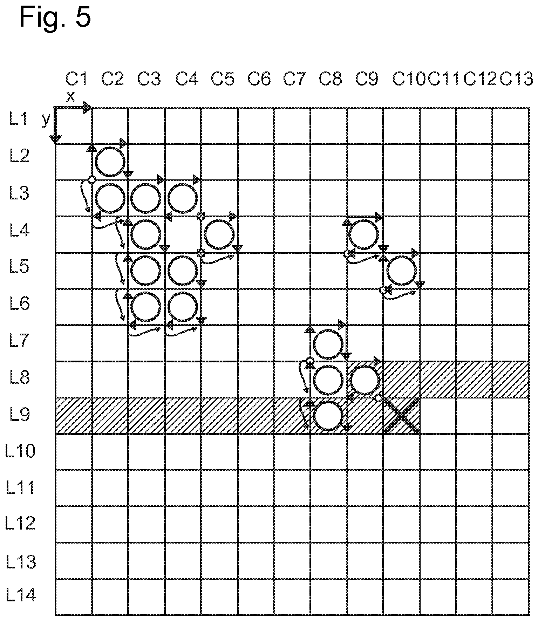

La figure 5 présente schématiquement l'instruction de traçage réalisée lors du balayage de la cellule C10L9. Les instructions de traçage préalablement réalisées sont apparentes sur cette figure, selon la représentation conventionnelle présentée en figure 8. Lors du balayage de la cellule C10L9 (désactivée), les trois autres cellules dont l'état est pris en compte sont: C8L9 (désactivé), C9L8 (activée), et C10L9 (désactivée). Les instructions correspondant au cas 2 sont appliquées : jonction du contour associé à la cellule C9L8 (contour créé lors du balayage de C8L7) et du contour associé à C9L9 (contour créé lors du balayage de C9L9).

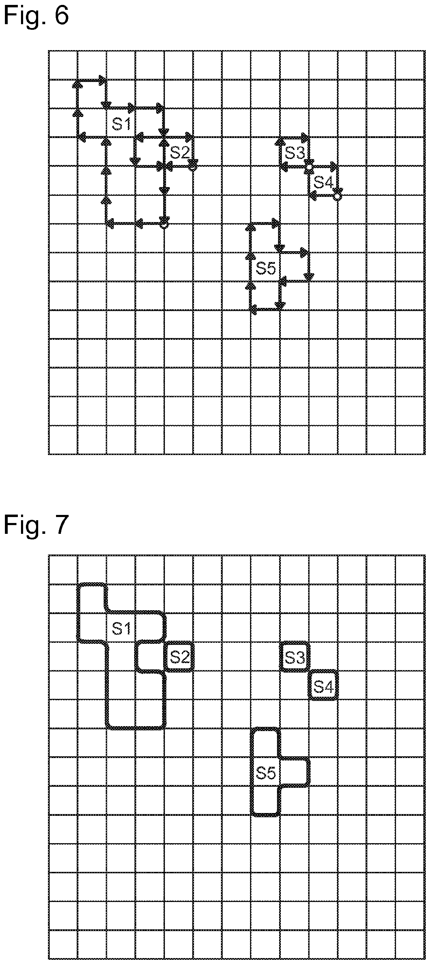

L'application successive des instructions de traçage mène ainsi à la génération des vecteurs représentés en figure 6, et définissant cinq contours référencés S1, S2, S3, S4 et S5.

La présence de cinq contours sur la surface matricielle traduit typiquement l'existence de cinq zones de contact distinctes sur le capteur tactile considéré.

Un contour est considéré intégralement construit lorsque le point d'arrivée du dernier vecteur de sa liste de vecteurs correspond au point de départ du contour.

Chaque contour est défini par des vecteurs orientés. Dans l'exemple présenté, les zones activées, typiquement les zones d'un capteur tactile ou un contact se produit, sont situées à l'intérieur du contour orienté selon le sens inverse trigonométrique.

Il est possible de mettre en oeuvre en parallèle ou successivement plusieurs procédés selon l'invention. Dans une application à un capteur tactile pouvant discriminer plusieurs niveaux de pression, il est ainsi possible de tracer un contour différent pour plusieurs isobares, chaque niveau de pression correspondant ainsi à une propriété donnée.

Selon un procédé d'analyse vectoriel de type connu, les formes des contours déterminés peuvent être retravaillées, afin d'aboutir typiquement à la définition de contours plus précis, tel que représentés en figure 7.

Le procédé précédemment décrit peut également être employé pour la détermination de contours dans des sous-ensembles de surfaces matricielles. Il est en effet parfois avantageux d'analyser une surface matricielle par sous-ensembles. Par exemple, une surface matricielle peut être divisée en quatre sous-ensembles, chaque sous-ensemble étant balayé, soit en parallèle, soit séquentiellement. Selon un second exemple, il est également connu dans le cadre de l'analyse de la surface d'un capteur tactile de définir un sous-ensemble autour d'un point de contact détecté, ou encore de limiter la zone d'analyse à un sous-ensemble sur lequel un contact est attendu (zone de clavier virtuel, icone, etc.).

Selon une variante de l'invention, plusieurs contours adjacents, situés chacun dans des sous-ensembles adjacents, c'est-à-dire des sous-ensembles ayant un bord ou une portion de bord en commun, peuvent être regroupés en un seul contour. Ce contour correspond alors au contour de cellules adjacentes en état activé, formant un groupe de cellules adjacentes activées situé à cheval sur deux sous-ensembles.

La figure 9 présente un système d'acquisition de données conforme à un mode de réalisation de l'invention. Le système d'acquisition de données comporte un écran tactile 10.

L'écran tactile 10 comprend un capteur tactile matriciel 11, par exemple du type multicontacts, juxtaposé à un écran de visualisation 12.

Dans ce mode de réalisation et de manière non limitative, le capteur tactile matriciel 11 est disposé au-dessus de l'écran de visualisation 12.

Dans cette application, le capteur tactile matriciel 11 est transparent afin de permettre la visualisation des données affichées sur l'écran de visualisation sous-jacent 12.

L'écran tactile 10 comporte également une interface de capture 13, un processeur principal 14 et un processeur graphique 15.

L'interface de capture 13 permet notamment d'acquérir des données mesurées au niveau du capteur tactile matriciel 11.

Cette interface de capture 13 contient les circuits d'acquisition et d'analyse nécessaires à l'acquisition des données, qui peuvent ensuite être transmises au processeur principal 14 pour traitement, puis mise en oeuvre des différentes fonctions de l'écran tactile 10.

Le système d'acquisition de données est en outre pourvu d'une mémoire électronique. Cette mémoire, ou ces mémoires dans le cas d'un système distribué, permet le stockage :
- de la bibliothèque d'instructions,
- des informations sur l'état des cellules (d'un nombre de cellules au moins égal au nombre de colonnes de la matrice plus deux), et
- des informations nécessaires à la définition des contours, soit pour chaque contour son identifiant, son point de départ, et la liste des vecteurs qui y sont associés.

On se rapportera avantageusement aux exemples de réalisation décrits dans le document EP 1 719 047 concernant les différentes applications et utilisations d'un tel écran tactile 10.

Dans le contexte d'une utilisation pour un capteur tactile, la détection du contour d'une zone, activée ou isobare, est particulièrement utile pour permettre une analyse fine de la nature du contact. Elle permet notamment d'améliorer la discrimination des différents types de contact en améliorant la qualité des informations envoyées au système informatique auquel le capteur tactile est lié.

L'invention a été précédemment décrite dans son application préférentielle, à savoir la détermination des contours des zones de contact sur un capteur tactile. De nombreuses autres applications sont envisageables sans sortir du champ de l'invention.

Par exemple, en appliquant une matrice appropriée à une représentation graphique, par exemple une carte météorologique, l'invention peut être employée pour tracer des contours de zones de pression, de températures, etc. Appliquée à une carte topographique, elle peut permettre le traçage de courbes d'altitudes. Appliquée à une carte géologique, elle peut permettre le traçage de courbes de nature de sol.

Elle peut être appliquée de manière générale à un logiciel ou procédé de traitement d'image pour des fonctions de détection de formes, d'une couleur, ou de toute autre propriété ayant une représentation particulière.

L'invention ainsi développée permet la détermination rapide de contours sur une surface matricielle, sans mettre en jeu de nombreux calculs découlant d'une méthode itérative.

## Revendications

1. Procédé de détermination d'un contour d'au moins une zone présentant une propriété donnée sur une surface matricielle comportant un ensemble de cellules, comprenant le balayage séquentiel des cellules de ladite surface matricielle afin de déterminer un état de chaque cellule vis-à-vis de la propriété donnée, une cellule étant dite dans un état activé lorsqu'elle présente la propriété donnée et dans un état désactivé lorsqu'elle ne présente pas la propriété donnée, le procédé comprenant, pour chaque cellule balayée, les étapes suivantes :
• détection (E1) de l'état activé ou désactivé de la cellule courante balayée,
• détermination (E2) de l'état activé ou désactivé de trois cellules précédemment balayées, voisines de la cellule courante balayée ;
• choix (E3), en fonction de l'état de la cellule courante balayée et des trois cellules voisines, d'une instruction de traçage;
• application (E4) de l'instruction de traçage ; et
• mémorisation (E5) de données issues de l'instruction de traçage, lesdites données définissant le contour au fur et à mesure du balayage séquentiel des cellules de la surface matricielle.

2. Procédé de détermination de contour selon la revendication 1, dans lequel l'instruction est choisie dans une bibliothèque préétablie de seize instructions correspondant aux seize combinaisons d'états que peuvent présenter ladite cellule courante balayée et lesdites trois cellules voisines.

3. Procédé de détermination de contour selon la revendication 1 ou la revendication 2, dans lequel les instructions de traçage sont vectorisées.

4. Procédé de détermination de contour selon la revendication 3, dans lequel un contour est défini par un point de départ et une liste de vecteurs.

5. Procédé de détermination de contour selon la revendication 4, dans lequel un contour est en outre défini par un identifiant propre.

6. Procédé de détermination de contour selon l'une quelconque des revendications 4 à 5, dans lequel chaque instruction de traçage est constituée d'opérations élémentaires choisies parmi :
a) la création d'un nouveau contour ;
b) l'ajout d'un vecteur à la fin de la liste de vecteurs d'un contour ;
c) l'ajout d'un vecteur au début de la liste de vecteurs d'un contour ;
d) la jonction de deux contours.

7. Procédé de détermination de contour selon l'une quelconque des revendications précédentes, dans lequel, chaque cellule étant définie dans un repère de la surface matricielle par une coordonnée en abscisse et une coordonnée en ordonnée, le balayage étant réalisé en balayant toute une ligne d'ordonnée, selon le sens croissant en abscisse, puis la ligne suivante, d'ordonnée supérieure, les trois cellules voisines à la cellule courant balayée de coordonnées (Cn,Lm) sont les cellules de coordonnées respectives :
• (Cn-1,Lm)
• (Cn-1,Lm-1)
• (Cn,Lm-1).

8. Procédé de détermination de contour selon l'une quelconque des revendications précédentes, dans lequel l'état activé d'une cellule est associé à la présence d'une caractéristique de la cellule dans une plage de valeurs prédéfinie.

9. Procédé de détermination de contour selon l'une des revendications précédentes, appliqué à un capteur tactile comprenant un réseau matriciel de cellules, dans lequel la propriété donnée est le niveau de pression de contact.

10. Procédé de détermination de contour selon la revendication 9, lesdites cellules étant définies à chaque intersection d'une ligne et d'une colonne d'un réseau de pistes conductrices arrangé en lignes et en colonnes, dans lequel le balayage séquentiel des cellules consiste à alimenter successivement chaque ligne du réseau et à mesurer, pour chaque ligne alimentée, et au niveau successivement de chaque colonne, une caractéristique électrique représentative d'un niveau d'impédance.

11. Procédé de détermination d'un contour d'au moins une zone présentant une propriété donnée sur une surface matricielle comportant un ensemble de cellules, dans lequel :
- on divise la surface matricielle en sous-ensembles de cellules, et
- on applique un procédé selon l'une quelconque des revendications 1 à 10 sur au moins un desdits sous-ensembles de cellules.

12. Procédé selon la revendication 11, dans lequel, si des contours adjacents ont été déterminés pour des sous-ensembles, lesdits contours adjacents sont joints en un seul contour.

13. Système d'acquisition de données d'un capteur tactile matriciel, comprenant un réseau matriciel de cellules, comprenant :
- des moyens de balayage séquentiel des cellules du réseau matriciel ;
- des moyens de mesure d'une caractéristique électrique au niveau de chaque cellule ;
- des moyens de détermination d'un état activé ou désactivé de chaque cellule en fonction de la caractéristique électrique mesurée,
- une bibliothèque d'instructions,
- une mémoire électronique, et
- un calculateur configuré pour la mise en oeuvre d'un procédé de détermination de contour selon l'une des revendications 1 à 12.

14. Système d'acquisition de données selon la revendication 13, comportant un écran de visualisation juxtaposé au capteur tactile matriciel de sorte à former un écran tactile.

## Patentansprüche

1. Ein Verfahren zum Bestimmen einer Kontur von mindestens einem Bereich mit einer gegebenen Eigenschaft auf einer Matrixoberfläche mit einer Vielzahl von Zellen, umfassend das sequenzielle Abtasten der Zellen der genannten Matrixoberfläche, um einen Zustand jeder Zelle in Bezug auf die gegebene Eigenschaft zu bestimmen, wobei eine Zelle in einem aktivierten Zustand genannt wird, wenn sie die gegebene Eigenschaft hat, und in einem deaktivierten Zustand genannt wird, wenn sie die gegebene Eigenschaft nicht hat, wobei das Verfahren für jede abgetastete Zelle die folgenden Schritte umfasst:
Erkennen (E1) des aktivierten oder deaktivierten Zustandes der aktuellen abgetasteten Zelle,
Bestimmen (E2) des aktivierten oder deaktivierten Zustandes von drei zuvor abgetasteten Zellen neben der aktuellen abgetasteten Zelle;
Auswählen (E3) einer Ablaufverfolgungs- bzw. Tracking-Anweisung entsprechend dem Zustand der aktuellen abgetasteten Zelle und der drei benachbarten Zellen;
Anwenden (E4) der Ablaufverfolgungsanweisung; und
Speichern (E5) von aus der Ablaufverfolgungsanweisung hervorgehenden Daten, wobei die genannten Daten im Laufe der sequenziellen Abtastung der Zellen der Matrixoberfläche die Kontur nach und nach definieren.

2. Ein Verfahren zur Konturbestimmung nach Anspruch 1, wobei die Anweisung aus einer vorher festgelegten Bibliothek aus sechzehn Anweisungen ausgewählt wird, die den sechzehn Zustandskombinationen entsprechen, die die genannte aktuelle abgetastete Zelle und die genannten drei benachbarten Zellen aufweisen können.

3. Ein Verfahren zur Konturbestimmung nach Anspruch 1 oder Anspruch 2, wobei die Ablaufverfolgungsanweisungen vektorisiert sind.

4. Ein Verfahren zur Konturbestimmung nach Anspruch 3, wobei eine Kontur durch einen Startpunkt und eine Liste von Vektoren definiert wird.

5. Ein Verfahren zur Konturbestimmung nach Anspruch 4, wobei eine Kontur ferner durch eine eigene Kennung definiert wird.

6. Ein Verfahren zur Konturbestimmung nach irgendeinem der Ansprüche von 4 bis 5, wobei jede Ablaufverfolgungsanweisung aus elementaren Operationen besteht, die aus Folgenden ausgewählt sind:
a) Erstellen einer neuen Kontur;
b) Hinzufügen eines Vektors am Ende der Liste der Vektoren einer Kontur;
c) Hinzufügen eines Vektors am Anfang der Liste der Vektoren einer Kontur;
d) Verbinden von zwei Konturen.

7. Ein Verfahren zur Konturbestimmung nach irgendeinem der vorhergehenden Ansprüche, bei dem, vorausgeschickt, dass jede Zelle in einem Bezugsrahmen der Matrixoberfläche durch eine Abszissenkoordinate und eine Ordinatenkoordinate definiert wird, und vorausgeschickt, dass das Abtasten durch Abtasten einer gesamten Ordinatenlinie entsprechend der zunehmenden Abszissenrichtung, dann der folgenden Linie mit höherer Ordinate durchgeführt wird, die drei Zellen neben der aktuellen abgetasteten Zelle mit den Koordinaten (Cn,Lm) die Zellen mit den folgenden entsprechenden Koordinaten sind:
(Cn-1,Lm)
(Cn-1,Lm-1)
(Cn,Lm-1).

8. Ein Verfahren zur Konturbestimmung nach irgendeinem der vorhergehenden Ansprüche, bei dem der aktivierte Zustand einer Zelle mit dem Vorhandensein einer Eigenschaft der Zelle in einem vorgegebenen Wertebereich assoziiert wird.

9. Ein Verfahren zur Konturbestimmung nach irgendeinem der vorhergehenden Ansprüche, angewandt auf einen Berührungssensor mit einer Matrixanordnung von Zellen, bei dem die gegebene Eigenschaft der Kontaktdruckpegel ist.

10. Ein Verfahren zur Konturbestimmung nach Anspruch 9, bei dem, vorausgeschickt, dass die genannten Zellen an jedem Schnittpunkt einer Reihe und einer Spalte eines Netzes von in Reihen und Spalten angeordneten Leiterbahnen definiert sind, die sequenzielle Abtastung der Zellen darin besteht, nacheinander jede Reihe des Netzes zu speisen und für jede gespeiste Reihe, und nacheinander auf der Ebene jeder Spalte, eine elektrische Eigenschaft zu messen, die einen Impedanzpegel darstellt.

11. Ein Verfahren zur Konturbestimmung von mindestens einer Zone mit einer gegebenen Eigenschaft auf einer Matrixoberfläche, die einen Satz von Zellen umfasst, bei dem:
- die Matrixoberfläche in Teilmengen von Zellen unterteilt wird, und
- ein Verfahren nach irgendeinem der Ansprüche von 1 bis 10 auf mindestens eine der genannten Teilmengen von Zellen angewendet wird.

12. Ein Verfahren nach Anspruch 11, wobei, falls benachbarte Konturen für Teilmengen bestimmt wurden, die genannten benachbarten Konturen zu einer einzigen Kontur verbunden werden.

13. Ein Datenerfassungssystem eines berührungsempfindlichen Matrix-Sensors mit einem Matrixnetz von Zellen, das Folgendes umfasst:
- Mittel zur sequenziellen Abtastung der Zellen des Matrixnetzes;
- Mittel zur Messung einer elektrischen Eigenschaft im Bereich jeder Zelle;
- Mittel zur Bestimmung eines aktivierten oder deaktivierten Zustandes jeder Zelle in Abhängigkeit von der gemessenen elektrischen Eigenschaft,
- eine Bibliothek mit Anweisungen,
- einen elektronischen Speicher und
- einen Rechner, der so konfiguriert ist, dass er ein Verfahren zur Konturbestimmung nach einem der Ansprüche von 1 bis 12 implementiert.

14. Ein Datenerfassungssystem nach Anspruch 13, umfassend einen Anzeigebildschirm, der am berührungsempfindlichen Matrix-Sensor angeordnet ist, um einen Touchscreen zu bilden.

## Claims

1. A method for determining a contour of at least one area having a given property on a matrix surface, comprising a set of cells, comprising the sequential scanning of the cells of said matrix surface in order to determine a state of each cell vis-à-vis the given property, a cell being said to be in an activated state when it has the given property and in a deactivated state when it does not have the given property, the method comprising, for each scanned cell, the following steps:
• detecting (E1) the activated or deactivated state of the currently scanned cell,
• determining (E2) the activated or deactivated state of three previously scanned cells which are next to the currently scanned cell;
• choosing (E3) a tracing instruction, on the basis of the state of the currently scanned cell and the three neighboring cells;
• applying (E4) the tracing instruction; and
• storing (E5) data from the tracing instruction, said data defining the contour during the sequential scanning of the cells of the matrix surface.

2. The method for determining a contour according to Claim 1, wherein the instruction is selected from a pre-established library of sixteen instructions corresponding to sixteen combinations of states which said currently scanned cell and said three neighboring cells may have.

3. The method for determining a contour according to Claim 1 or Claim 2, wherein the tracing instructions are vectorized.

4. The method for determining a contour according to Claim 3, wherein a contour is defined by a starting point and a list of vectors.

5. The method for determining a contour according to Claim 4, wherein a contour is additionally defined by its own identifier.

6. The method for determining a contour according to any one of Claims 4 to 5, wherein each tracing instruction consists of elementary operations chosen from:
a) creating a new contour;
b) adding a vector to the end of the list of vectors of a contour;
c) adding a vector to the top of the list of vectors of a contour;
d) joining two contours.

7. The method for determining a contour according to any one of the preceding claims, wherein, each cell being defined as a reference point of the matrix surface by a coordinate on the X-axis and a coordinate on the Y-axis, the scanning being performed by scanning an entire line on the Y-axis, in accordance with the increasing direction on the X-axis, then the next upper line on the Y-axis, the three neighboring cells of the currently scanned cell having coordinates (Cn, Lm) are the cells having the respective coordinates:
• (Cn-1, Lm)
• (Cn-1, Lm-1)
• (Cn, Lm-1).

8. The method for determining a contour according to any one of the preceding claims, wherein the activated state of a cell is associated with the presence of a characteristic of the cell in a predefined range of values.

9. The method for determining a contour according to any one of the preceding claims, applied to a touch-sensitive sensor comprising a matrix array of cells, wherein the given property is the level of contact pressure.

10. The method for determining a contour according to Claim 9, said cells being defined at each intersection of a line and a column of an array of conductor tracks arranged in lines and columns, wherein the sequential scanning of the cells consists of successively supplying each line of the array and of measuring, for each supplied line, and successively for each column, a representative electrical characteristic of a level of impedance.

11. The method for determining a contour of at least one area having a given property on a matrix surface, comprising a set of cells, wherein:
- the matrix surface is divided into subsets of cells, and
- a method according to any one of Claims 1 to 10 is applied to at least one of said subsets of cells.

12. The method according to Claim 11, wherein, if adjacent contours have been determined for subsets, said adjacent contours are joined in a single contour.

13. A data acquisition system of a matrix touch-sensitive sensor, comprising a matrix array of cells, comprising:
- sequential scanning means of the matrix array cells;
- means for measuring an electrical characteristic at each cell;
- means for determining an activated or deactivated state of each cell based on the measured electrical characteristic,
- an instruction library,
- an electronic memory, and
- a calculator configured to implement a method for determining a contour according to any one of Claims 1 to 12.

14. The data acquisition system according to Claim 13, comprising a display screen juxtaposed with the matrix touch-sensitive sensor so as to form a touch screen.
